Europäisches Patentamt

European Patent Office

Office européen des brevets

(19)

(11) Veröffentlichungsnummer: **0 319 511 B1**

# EUROPÄISCHE PATENTSCHRIFT

(12)

(45) Veröffentlichungstag der Patentschrift:
21.08.91 Patentblatt 91/34

(51) Int. Cl.$^5$: **B32B 15/01**, B23D 65/00

(21) Anmeldenummer: 88890292.1

(22) Anmeldetag: 22.11.88

(54) Bi-Metallband für Metallsägen.

(30) Priorität: 04.12.87 AT 3196/87

(43) Veröffentlichungstag der Anmeldung:
07.06.89 Patentblatt 89/23

(45) Bekanntmachung des Hinweises auf die
Patenterteilung:
21.08.91 Patentblatt 91/34

(84) Benannte Vertragsstaaten:
BE CH DE FR GB IT LI LU NL SE

(56) Entgegenhaltungen:
DE-A- 2 542 929
FR-A- 2 365 398
FR-A- 2 374 159
GB-A- 973 487
US-A- 2 683 923
US-A- 3 034 379

(73) Patentinhaber: BÖHLER Gesellschaft m.b.H.
Elisabethstrasse 12
A-1010 Wien (AT)

(72) Erfinder: Daxelmüller, Manfred, Dipl.-Ing.
Redtenbachstr. 12a
A-3340 Waidhofen/Ybbs (AT)
Erfinder: Kraxner, Gerhard, Dr.
Nellingstr. 1
A-3333 Böhlerwerk (AT)
Erfinder: Döberl, Dieter, Dipl.-Ing.
Nellingstr. 7a
A-3333 Böhlerwerk (AT)

## Beschreibung

Die Erfindung betrifft ein Bi-Metallband, insbesondere zur Herstellung von Metallsägeblättern und Metallsägebändern, bestehend aus einem Trägerband und einer Schneidstahlauflage, vorzugsweise einer Schnellstahlauflage.

Bi-Metallbänder für Metallsägeblätter und Metallsägebänder werden hergestellt, indem man auf ein Trägerband, beispielsweise mittels Elektronenstrahlschweißung, eine Schneidstahlauflage, vorzugsweise eine Schnellstahlauflage, aufschweißt, hernach meist ein Entspannen der bei der Schweißung gehärteten Zone durch eine Anlaß-Wärmebehandlung des Rohbandes vornimmt, dieses Rohband einer Wärmebehandlung zum Weichglühen des Werkstoffes im Schweißnahtbereich unterwirft, worauf die Fertigbearbeitung des Weichbandes erfolgt.

Nach dem Einarbeiten und gegebenenfalls Schränken der Sägezähne wird die Härtung und das Anlassen des Sägeblattes bzw. des Sägebandes vorgenommen, wobei die Härte und Anlaßtemperatur auf die Schneid-bzw. Schnellstahllegierung abgestimmt werden müssen und demzufolge insbesondere die Härtetemperatur für den Trägerbandstahl ungewöhnlich hoch ist, sodaß es zur Grobkornbildung und zur Materialversprödung kommen kann.

Um bei guten Schneideigenschaften der Säge den hohen Beanspruchungen im praktischen Betrieb über lange Zeit gerecht zu werden, sind Endhärtewerte der Schnellstahlzähne von mindestens 65 HRC gefordert, wobei das Trägerband zur Vermeidung ungünstiger Hochkantdurchbiegungen und für eine gute Führungsstabilität eine Härte von mindestens 470 HV aufweisen muß. Bei Sägeanlagen mit umlaufenden Sägebändern sind insbesondere eine hohe Biegewechselfestigkeit und gute Zähigkeit des Trägerbandes von entscheidender Bedeutung.

Es ist bekannt, daß als Trägerband Kohlenstoffstähle und vorzugsweise Federstähle mit Kohlenstoffgehalten von ca. 0,2 bis 0,6% und Legierungsanteilen von bis zu ca. 10% verwendet werden. Diese Werkstoffe sind bei Anwendung entsprechender Verfahren mit Schnellstahl verschweißbar, wobei die Neigung zur Ausbildung von spröden Bereichen oder von Bereichen mit geringer Härte in der Schweißzone gering ist. Derartige Bereiche können während des Schweißvorganges und/oder während der Wärmebehandlung entstehen und werden durch die Diffusion von Elementen, insbesondere des Kohlenstoffes aufgrund unterschiedlicher Konzentrationen bzw. Aktivitäten in den verschieden zusammengesetzten Legierungen verursacht.

Weiters ist aus AT-PS 371149 bekannt geworden, daß zur Verminderung der Grobkornbildung bei der auf den Schnellstahltyp ausgerichteten Härtung auch Mikrolegierungselemente dem Trägerwerkstoff zugesetzt sein können, wodurch ein Abfall der Zähigkeitseigenschaften verhindert werden soll.

Alle Bi-Metall-Sägebänder haben somit die Nachteile gemeinsam daß bei Einstellung guter Schneideigenschaften der Schneidstahlauflage bzw. der Schnellstahlauflage durch entsprechende Härte- und Anlaßverfahren die geforderten hohen mechanischen Kennwerte des Trägerbandes nur schwer erreichbar sind und insbesondere die Biegewechselfestigkeit des Bandes begrenzt ist. Dadurch kann es zu Brüchen des Sägebandes aufgrund von Materialermüdung des Trägerwerkstoffes kommen, obwohl die Schneideigenschaften noch in ausreichendem Maße gegeben sind. Der Einsatz höherwertiger Schneidmaterialien, welche verbesserte Schneideigenschaften aufweisen, ist unwirtschaftlich, weil die Standzeit des Trägerbandes wesentlich geringer ist als die Standzeit der Sägezähne.

Aufgabe der Erfindung ist, ein Bi-Metall-Sägeband zu schaffen, welches insgesamt verbesserte Langzeitgebrauchseigenschaften bzw. Sägestandzeit aufweist, wobei eine hohe Biegewechselfestigkeit sowie Zähigkeit und Härte des Trägerbandes erreicht werden und der Übergang vom Trägerband zur Schneidstahlauflage, also die Schweißzone, entsprechende mechanische Kennwerte aufweist.

Diese Aufgaben werden erfindungsgemäß dadurch gelöst, daß das Trägerband aus einem martensitaushärtenden Stahl mit einer Kohlenstoffkonzentration von max. 0,05 Gew.-% und einem Legierungsgehalt in Gew.-% von mindestens 10, vorzugsweise mindestens 18, besteht. Bevorzugt ist es, wenn das Trägerband einen Kohlenstoffgehalt von 0,007 bis 0,03 Gew.-%, insbesondere von 0,01 bis 0,02 Gew.-% aufweist, und die Legierungselemente in Gew.-% 4 bis 25 Ni, insbesondere 8 bis 18 Ni, 4 bis 15 Co, insbesondere 6 bis 12 Co, 2 bis 10 Mo, insbesondere 4 bis 8 Mo und 0,2 bis 2 Ti und/oder Al und/oder Nb/Ta, insbesondere 0,4 bis 1 Ti und/oder Al und/oder Nb/Ta, Rest Eisen und erschmelzungsbedingte Verunreinigungen enthält. Damit werden eine hohe Biegewechselfestigkeit sowie Zähigkeit und Härte des Trägerbandes erreicht und die Anforderungen an die Schweißverbindung betreffend die mechanischen Kennwerte voll erfüllt.

In martensitaushärtendem Stahl soll der Kohlenstoffgehalt der Legierung möglichst niedrig sein, weil sonst mit den kohlenstoffaffinen Elementen Karbide wie beispielsweise TiC, MoC, $Mo_2C$, NbC etc. in einer weichen Grundmasse, insbesondere an den Korngrenzen, gebildet werden, was zu einer Versprödung des Werkstoffes führt. Weites tritt bei Anwendung hoher Lösungsglühtemperaturen von über 900 bis 1000°C ein starkes Kornwachstum ein, wobei diese Grobkornbildung die mechanischen Eigenschaften, insbesondere die Zähigkeit und die Biegewechselfestigkeit, stark reduziert.

Es ist dem Fachmann bekannt, daß durch den niedrigen Kohlenstoffgehalt der martensitaushärtbaren Legierungen ein Verbinden artgleicher Teile, beispielsweise durch WIG-Schweißung, insbesondere durch Elektronenstrahl-Schweißung, erfolgen kann. Wenn entsprechend günstige Schweißparameter angewendet werden und anschließend an die Schweißung ein Lösungsglühen, Abkühlen und Auslagern des Werkstoffes erfolgen, treten bei gleicher Härte wie im Grundmaterial zwar geringere Bruchverformungswerte und eine geringere Überlebenswahrscheinlichkeit unter Schwingbeanspruchung der Schweißzone auf, das Werkstück kann jedoch bei geringen Biegewechselbeanspruchungen eingesetzt werden.

Stähle mit einem Legierungsgehalt von größer 10 Gew.-% haben auch im Vergleich mit niedriglegierten Werkstoffen, die als Stahlsägebänder verwendet werden, unterschiedliche Wärmeleitfähigkeiten und unterschiedliche Temperaturausdehnungskoeffizienten, wodurch im praktischen Einsatz bzw. bei der im Sägebetrieb auftretenden Erwärmung, Verwerfungen und Durchbiegungen des Trägerbandes auftreten können und zu groben, unsauberen Schnitten führen.

Völlig überraschend hat sich gezeigt, daß eine Schneidstahl- bzw. Schnellstahlauflage auf ein Trägerband aus martensitaushärtbarem Stahl mit Gehalten von höchstens 0,05 Gew.-% C und mindestens 10 Gew.-% Legierungselementeanteil aufgeschweißt werden kann und daß mit einem daraus gefertigten Sägeblatt, insbesondere Sägeband, wesentlich erhöhte Sägestandzeiten erreichbar sind.

Der Fachmann erwartete, daß im Bereich der Schweißzone bzw. zwischen Schnellstahl und Trägerband, Karbidausscheidungen in einer weichen, spröden Grundmasse gebildet werden, weil durch die hohen Temperaturen beim Schweißen, Härten und Anlassen Legierungselemente, insbesondere der Kohlenstoff, in Richtung zu niedrigeren Konzentrationen diffundieren. Weiters bestand die Fachmeinung, daß bei einer Härtung, die auf den Schneid- bzw. Schnellstahl ausgerichtet ist und Austenitisierungstemperaturen von ca. 1150 bis 1220°C verlangt, die martensitaushärtbare Legierung durch Grobkornbildung aufgrund einer um bis zu 500°C überhöhten Lösungsglühtemperatur derart versprödet, daß keine ausreichende Biegewechselfestigkeit des Trägerbandes erreicht werden kann. Diese Vorurteile der Fachwelt konnten keine Bestätigung finden ; sowohl die Härte und Zähigkeit der Schweißzone bei intermittierender Beanspruchung der Sägezähne, als auch die Biegewechselfestigkeit und Härte des Trägerbandes bei umlaufendem Sägeband waren derart, daß im praktischen Betrieb wesentlich erhöhte Sägestandzeiten erreicht werden konnten. Weiters wurde gefunden, daß ein Kohlenstoffgehalt von 0,01 bis 0,02 Gew.-% der martensitaushärtbaren Legierung das Kornwachstum bei überhöhter Lösungsglühtemperatur vermindert und eine Verbesserung der mechanischen Eigenschaften, insbesondere der Bruchzähigkeit und Biegewechselfestigkeit bewirkt.

Im praktischen Sägebetrieb konnten überraschenderweise auch die erwarteten Sägeblattverwerfungen und Sägeblattdurchbiegungen aufgrund der unterschiedlichen Wärmeleitung und Wärmedehnung von Werkstoffen mit Legierungsanteilen von über 10 Gew.-% nicht festgestellt werden. Besonders gute Eigenschaften werden bei Metallsägen erreicht, wenn das Trägerband die Legierungselemente in Gew.-% 8 bis 18 Ni, 6 bis 12 Co, 4 bis 8 Mo, 0,4 bis 1 Ti, Rest Eisen und erschmelzungsbedingte Verunreinigungen enthält.

Im folgenden wird das erfindungsgemäße Bi-Metallband anhand der Herstellung und Erprobung näher beschrieben.

Beispiel 1 :

Ein Bi-Metallband mit Abmessungen von 1,27 × 38,1 mm wurde erzeugt, indem auf ein bei 800°C lösungsgelühtes Trägerband mit einer in der nachfolgenden Tabelle 1 angegebenen chemischen Zusammensetzung in Gew.-% ein Schnellarbeitsstahl, Werkstoff-Nr. 1.3343 mittels Elektronenstrahlschweißung aufgebracht wurde.

Tabelle 1:

| | C | Si | Mn | Cr | Mo | Ni | V | W | Co | Ti | Al |
|---|---|---|---|---|---|---|---|---|---|---|---|
| Träger-band | 0,009 | 0,07 | 0,085 | 0,14 | 5,06 | 18,17 | 0,016 | 0,20 | 8,55 | 0,53 | 0,083 |
| Schneid-stahl | 0,85 | 0,30 | 0,30 | 4,00 | 5,10 | 0,10 | 1,95 | 6,10 | 0,05 | - | 0,015 |

Nach dem Schweißvorgang erfolgte ein Entspannen bzw. Anlassen der schweißbeeinflußten Zone bei ca. 400°C und ein Weichglühen bei einer Temperatur von 730°C während einer Zeit von 9 Stunden, worauf eine Maßbearbeitung durch ein Walzen und ein Schleifen des Weichbandes durchgeführt wurden. In das Weichband wurde ein Einarbeiten von Sägezähnen vorgenommen, worauf eine auf den Schneidstahl bzw. Schnellstahl ausgerichtete Härte- und Anlaßbehandlung gemäß Tabelle 2 erfolgte.

Tabelle 2:

| | Temperatur | Zeit | Abkühlmedium |
|---|---|---|---|
| Härten | 1210°C | 30 Sekunden | Öl |
| 1. Anlassen | 560°C | 1 Stunde | Luft |
| 2. Anlassen | 560°C | 1 Stunde | Luft |

Bei der Materialerprobung wurde festgestellt, daß das Trägerband eine Härte von 560 bis 570 HV aufwies und beim Schnellstahl eine Endhärte von 860 bis 870 HV bzw. 65 HRC gegeben war. Die Härte des Materials im Schweißnahtbereich stieg kontinuierlich von 560 bis 570 HV auf Werte von 860 bis 870 HV an. Metallographische Untersuchungen des Schweißbereiches im Sägeband zeigten einen Übergang vom ausscheidungsgehärteten martensitischen Gefüge in ein Härte- und Anlaßgefüge des Schnellarbeitsstahles, wobei keinerlei Karbid- und/oder Austenit-Anreicherungen vorlagen. Das Trägerband und der Schweißbereich wiesen hohe Materialzähigkeitswerte auf. Die Biegewechselfestigkeitsprüfung ergab bei einer Ausschlagsspannung Sigma a von 1030 N/mm$^2$ Werte von $4,5 \times 10^4$ Lastwechsel bis zum Bruch, im praktischen Einsatz konnte eine um das 1,8-fache erhöhte Standzeit der Metallsäge festgestellt werden.

Beispiel 2:

Ein Bi-Metallband mit den Abmessungen von $1,60 \times 67,0$ mm und einer Kombination von Werkstoffen, welche durch die in Tabelle 3 angegebenen chemischen Zusammensetzungen bestimmt sind, wurde mittels Elektronenstrahlschweißung erzeugt, wobei das Vormaterial für die Schneid- bzw. Schnellstahlauflage auf pulvermetallurgischem Weg hergestellt war.

Tabelle 3:

| | C | Si | Mn | Cr | Mo | Ni | V | W | Co | Ti | Al |
|---|---|---|---|---|---|---|---|---|---|---|---|
| Träger-band | 0,012 | 0,04 | 0,06 | 0,12 | 4,23 | 18,10 | - | 0,08 | 12,07 | 1,54 | 0,13 |
| Schneid-stahl | 1,52 | 0,34 | 0,32 | 4,01 | 5,90 | 0,03 | 4,23 | 7,93 | 8,06 | - | 0,003 |

Die Weiterverarbeitung zu einem Bi-Metall-Sägeband erfolgte wie in Beispiel 1 angegeben, wobei die in Tabelle 4 zusammengestellten Härte- und Anlaßparameter angewendet wurden.

Tabelle 4:

| | Temperatur | Zeit | Abkühlmedium |
|---|---|---|---|
| Härten | 1220°C | 55 Sekunden | Öl |
| 1. Anlassen | 560°C | 1,2 Stunden | Luft |
| 2. Anlassen | 560°C | 1 Stunde | Luft |

Nach der Wärmebehandlung wies das Trägerband eine Härte von 580 bis 590 HV, die Schnellstahlauflage eine solche von 940 bis 950 HV auf. Der Härteanstieg im Verbindungsbereich der beiden Werkstoffe bzw. in der Schweißzone war wiederum kontinuierlich, wobei gute Zähigkeitswerte festgestellt wurden. Metallographische Untersuchungen zeigten, daß die aufgrund des Kohlenstoffgehaltes von 0,012 Gew.-% im Trägermaterial gebildeten Karbide im Inneren der Körner bzw. nicht an den Korngrenzen vorlagen und daß trotz der angewandten Härtetemperatur von 1220°C, die um ca. 420°C über der Lösungsglühtemperatur der ausscheidungshärtenden Legierung liegt, ein Feinkorngefüge mit höheren Werten als ASTM 5 entspricht, gegeben war. Bei einer Ausschlagsspannung Sigma a von 1030 N/mm² ergab die Biegewechselfestigkeitsprüfung einen Wert von 7,1 × 10⁴ Lastwechsel bis zum Bruch. Im praktischen Einsatz in einer Bandsägemaschine wurde im Vergleich mit Bi-Metallsägen mit Federstahl-Trägerband eine ca. 3-fache Standzeit erreicht, wobei die Schneidleistung aufgrund der pulvermetallurgischen Herstellung des Schneidstahles wesentlich höher war.

**Patentansprüche**

1. Bi-Metallband, insbesondere zur Herstellung von Metallsägeblättern und Metallsägebändern, bestehend aus einem Trägerband und einer Schneidstahlauflage, vorzugsweise einer Schnellstahlauflage, dadurch gekennzeichnet, daß das Trägerband aus einem martensitaushärtbaren Stahl mit einem Kohlenstoffgehalt von max. 0,05 Gew.-% und einem Legierungsgehalt von mindestens 10 Gew.-%, vorzugsweise mindestens 18 Gew.-%, besteht.

2. Bi-Metallband nach Anspruch 1, dadurch gekennzeichnet, daß das Trägerband einen Kohlenstoffgehalt von 0,007 bis 0,03 Gew.-%, vorzugsweise von 0,01 bis 0,02 Gew.-%, aufweist.

3. Bi-Metallband nach Anspruch 1 und 2, dadurch gekennzeichnet, daß der martensitaushärtbare Stahl des Trägerbandes die Legierungselemente in Gew.-% 4 bis 25 Ni, vorzugsweise 8 bis 18 Ni, 4 bis 15 Co, vorzugsweise 6 bis 12 Co, 2 bis 10 Mo, vorzugsweise 4 bis 8 Mo, 0,2 bis 2 Ti und/oder Al und/oder Nb/Ta, vorzugsweise 0,4 bis 1 Ti und/oder Al und/oder Nb/Ta, Rest Eisen und erschmelzungsbedingte Verunreinigungen enthält.

**Claims**

1. Bimetallic strip, in particular for manufacturing metal saw blades and metal saw strips, consisting of a backing strip and a cutter layer, preferably a high-speed steel layer, characterised in that the backing strip consists of a maraging steel having a carbon content of at most 0.05% by weight and an alloy content of at least 10% by weight, preferably at least 18% by weight.

2. Bimetallic strip according to Claim 1, characterised in that the backing strip has a carbon content of 0.007 to 0.03% by weight, preferably of 0.01 to 0.02% by weight.

3. Bimetallic strip according to Claims 1 and 2, characterised in that the maraging steel of the backing strip contains the alloy elements, in percent by weight, 4 to 25 Ni, preferably 8 to 18 Ni, 4 to 15 Co, preferably 6 to 12 Co, 2 to 10 Mo, preferably 4 to 8 Mo, 0.2 to 2 Ti and/or Al and/or Nb/Ta, preferably 0.4 to 1 Ti and/or Al and/or Nb/Ta, remainder iron and impurities due to steel production.

**Revendications**

1. Bande bimétallique, en particulier pour la production de lames de scies à métaux et de bandes de scies à métaux, composée d'une bande de support et d'un revêtement en acier de coupe, de préférence un revêtement en acier à coupe rapide, caractérisée en ce que la bande de support est constituée d'un acier à trempe martensitique à concentration de carbone de max. 0,05% en poids et à teneur en alliage d'au moins 10% en poids, de préférence d'au moins 18% en poids.

2. Bande bimétallique suivant la revendication 1, caractérisée en ce que la bande de support présente une teneur en carbone de 0,007 à 0,03% en poids, de préférence de 0,01 à 0,02% en poids.

3. Bande bimétallique suivant la revendication 1 et 2, caractérisée en ce que l'acier à trempe martensitique de la bande de support contient les éléments d'alliage suivants, en % en poids : 4 à 25 Ni, de préférence 8 à 18 Ni, 4 à 15 Co, de préférence 6 à 12 Co, 2 à 10 Mo, de préférence 4 à 8 Mo et 0,2 à 2 Ti et/ou Al et/ou Nb/Ta, de préférence 0,4 à 1 Ti et/ou Al et/ou Nb/Ta, pour le reste du fer et des impuretés conditionnées par la fusion.